# EUROPÄISCHE PATENTSCHRIFT

(11) **EP 3 681 824 B1**
(45) Veröffentlichungstag und Bekanntmachung des Hinweises auf die Patenterteilung: **26.01.2022**
(21) Anmeldenummer: 19725846.0
(22) Anmeldetag: 15.05.2019
(51) Int. Cl.: B65G 1/04

(54) **AUTOMATISIERTES LAGERSYSTEM MIT GEFÜHRTEN TRANSFERMITTELN**
AUTOMATED STORAGE SYSTEM HAVING GUIDED TRANSFER MEANS
SYSTÈME DE STOCKAGE AUTOMATISÉ DOTÉ DE MOYENS DE TRANSFERT GUIDÉS

(30) Priorität: 15.05.2018 AT 504062018
(43) Veröffentlichungstag der Anmeldung: 22.07.2020
(73) Patentinhaber: Knapp AG, 8075 Hart bei Graz (AT)
(72) Erfinder: WEND, Michael, 33619 Bielefeld (DE)
(74) Vertreter: Röggla, Harald
(86) Internationale Anmeldenummer: PCT/AT2019/060161
(87) Internationale Veröffentlichungsnummer: WO 2019/217982

(56) Entgegenhaltungen:
- EP-A2- 2 377 782
- WO-A1-2014/057337
- WO-A2-2018/201176
- AT-B1- 516 612

## Beschreibung

Die Erfindung betrifft ein automatisiertes Lagersystem nach dem Oberbegriff des Anspruchs 1.

Das Dokument AT 516612 B1 offenbart ein automatisiertes Lagersystem mit Regalen mit Lagerplätzen zum Lagern von Hängewaren. Die Hängeware ist in einer Lagerrichtung in den Lagerplätzen in Lagerschienen verschiebbar hängend gelagert. Zwischen den Regalen sind Regalgassen vorgesehen, in denen Lastaufnahmemittel des automatisierten Lagersystems in einer Längsrichtung verfahrbar sind. Die Lastaufnahmemittel weisen jeweils ein durch ein Teleskopelement gebildetes Transfermittel und eine fest mit dem Lastaufnahmemittel verbundene Antriebseinheit zum Antreiben des Teleskopelements auf, wobei das Teleskopelement quer zur Längsrichtung am Lastaufnahmemittel angeordnet ist.

Bei einem Transfervorgang kann mit dem Teleskopelement eine mit dem Lastaufnahmemittel transportierte Hängeware von dem Lastaufnahmemittel auf die Lagerschiene eines der Lagerplätze eingelagert werden oder Hängeware von der Lagerschiene eines der Lagerplätze auf das Lastaufnahmemittel ausgelagert werden. Dazu wird das Teleskopelement in die Lagerplätze ein und ausgefahren.

Aufgrund einer großen Tiefe der Lagerplätze - bis zu zwei Meter - und einer geringen Breite der Lastaufnahmemittel sind zum Erreichen sämtlicher Hängewaren auf den Lagerschienen der Lagerplätze sehr lange Teleskopelemente mit mehreren Gliedern erforderlich. Um ein Durchhängen des Teleskopelements auch noch nach jahrelangem Einsatz zuverlässig zu verhindern, muss das Teleskopelement sehr hohen mechanischen Anforderungen genügen. So muss das Teleskopelement zum einen sehr steif ausgebildet sein und zum anderen sehr exakt gefertigt sein, damit zwischen den Gliedern möglichst wenig Spiel auftritt. Die notwendige hohe Steifigkeit führt aber zu einem hohen Gewicht des Teleskopelements und somit auch der Lastaufnahmemittel, was zu erhöhten Verschleiß der angetriebenen Komponenten führt. Darüber hinaus müssen Antriebsmittel der Lastaufnahmemittel mit sehr leistungsfähigen Antriebskomponenten ausgestattet sein, um durch die höhere Masse und die damit einhergehende erhöhte Massenträgheit der Lastaufnahmemittel dennoch eine ausreichende Beschleunigung der Lastaufnahmemittel zum schnellen Abarbeiten von Ein- und Auslageraufträgen gewährleisten zu können.

Es ist die Aufgabe der vorliegenden Erfindung ein automatisiertes Lagersystem bereit zu stellen, das die Nachteile des Standes der Technik überwindet und bei dem das Lastaufnahmemittel insbesondere ein Ebenenregalbediengerät möglichst leicht ausgebildet ist.

Erfindungsgemäß wird die vorliegende Aufgabe durch ein automatisiertes Lagersystem mit den Merkmalen des kennzeichnenden Teils des Anspruchs 1 gelöst. Bevorzugte Ausgestaltungen der Erfindung sind Gegenstand der abhängigen Ansprüche.

Das erfindungsgemäße automatisierte Lagersystem weist pro Lagerplatz eine Führung auf, wobei die Führung ausgebildet ist die Transfermittel zumindest abschnittsweise beim Ein- und Auslagern von Hängeware zu führen. Darüber hinaus ist das Transfermittel ausgebildet die Führung zumindest abschnittsweise beim Ein- und Auslagern von Hängeware zu kontaktieren. Abschnittsweise bedeutet in diesem Zusammenhang, dass das Transfermittel nicht über eine komplette Tiefe der Lagerplätze beim Ein- und Auslagern von der Hängeware durch die Führung geführt sein muss. So kann zum Beispiel die Führung kürzer ausgebildet sein als die Lagerschiene eines der Lagerplätze, wobei sich die Führung nur von der Regalgasse aus gesehen im hinteren Bereich des Lagerplatzes erstreckt und das Transfermittel beim Ein- und Auslagern somit nur im hinteren Bereich des Lagerplatzes geführt wird. Darüber hinaus besteht die Möglichkeit, dass die Führung in mehrere Abschnitte unterteilt ist und somit Teilführung gebildet werden, wobei das Transfermittel durch die Führung nur in den Abschnitten geführt wird. Die Teilführungen können entweder miteinander verbunden sein oder separat angeordnet sein. Durch die Führung ist der Vorteil erhalten, dass das Transfermittel weniger steif ausgebildet sein muss, da das Transfermittel beim Ein- und Auslagern von Hängeware durch die Führung geführt und somit auch gestützt wird. Infolgedessen kann das Transfermittel sehr viel leichter ausgebildet werden, wodurch das Gewicht des Lastaufnahmemittels beziehungsweise Ebenenregalbediengeräts reduziert werden kann. Durch das geringe Gewicht wird nicht nur Verschleiß reduziert, sondern es können auch Antriebskomponenten zum Antrieb der Lastaufnahmemittel eingesetzt werden, die weniger Leistung aufweisen und somit günstiger in der Anschaffung sind.

Die Antriebseinheit des Transfermittels ist fest mit dem Lastaufnahmemittel verbunden, wodurch das Transfermittel beim Ein- und Auslagern von Hängeware stets mechanisch mit dem Lastaufnahmemittel verbunden bleibt.

Es sei hier noch darauf hingewiesen, dass das Dokument AT 516612 B1 in einer weiteren Ausführungsvariante zwar eine der Führung ähnliche Schiene offenbart, die in den Lagerplätzen angeordnet ist, diese dient aber nicht zur Führung eines Transfermittels nach der vorliegenden Erfindung, sondern dient in paarweiser Anordnung als Fahrschiene für ein Ein- und Auslagerfahrzeug. Das Ein- und Auslagerfahrzeug ist eine autonom fahrende Einheit und weist eine in das Ein- und Auslagerfahrzeug fest eingebaute Antriebseinheit auf, um das Lastaufnahmemittel beim Ein- und Auslagern von Hängeware in einen Lagerplatz zur Gänze verlassen zu können. Das Ein- und Auslagerfahrzeug bleibt beim Ein- und Auslagern von Hängeware nicht mechanisch mit dem Lastaufnahmemittel verbunden. Darüber hinaus ist festzuhalten, dass ein automatisiertes Lagersystem mit so einem Ein- und Auslagerfahrzeug auch nicht zur Lösung der oben gestellten Aufgabe der Erfindung herangezogen werden kann, da durch die vielen zusätzlichen Komponenten des Ein- und Auslagerfahrzeugs das Gewicht des Lastaufnahmemittels nicht reduziert wird, sondern ganz im Gegenteil aufgrund der zusätzlichen Komponenten noch weiter erhöht wird.

Das Transfermittel wird durch ein flexibles Element, insbesondere eine Kette, einen Riemen oder ein Band gebildet. Die Antriebseinheit kann zum Beispiel durch einen Elektromotor mit einem einfachen Kettenrad oder einer Antriebsscheibe gebildet sein, das/ die auf das flexible Element wirkt. Vorteilhaft ist auf dem Lastaufnahmemittel ein Speicher für das flexible Element vorgesehen, um das flexible Element während einer Fahrt des Lastaufnahmemittels zwischen einzelnen Lagerplätzen oder Übergabestationen zur Übergabe von der Hängeware sicher zu verstauen. Der Speicher kann beispielsweise durch ein einfaches rundes oder polygonal-förmiges offenes oder geschlossenes Rohr gebildet sein, in welchem das Transfermittel untergebracht ist, oder durch einen Rollenspeicher gebildet sein, in dem das flexible Element aufgerollt ist. Somit sind zum Manipulieren des flexiblen Elements sehr wenige Komponenten nötig, was in Kombination mit dem geringen Gewicht des flexiblen Elements zur einem sehr geringen Gewicht des Lastaufnahmemittels führt.

Weiterhin ist die Führung so ausgebildet, dass das flexible Element angetrieben durch die Antriebseinheit in die Führung einführbar ist und/oder aus dieser ausziehbar ist und dass das flexible Element beim Einführen und/oder Ausziehen entlang der Führung geführt ist. Durch die Führung wird ein Ausweichen des flexiblen Elements beim Einschieben in die Führung verhindert. Die Führung ist dabei zweckmäßig durch ein rundes oder polygonal-förmiges offenes oder geschlossenes Rohr gebildet. Bevorzugt ist das Rohr an seiner Innenseite mit einer reibungsarmen Oberfläche versehen. Unter einem offenen Rohr wird in diesem Zusammenhang auch beispielsweise ein Rohr gesehen, welches aus zwei C-Profilen gebildet ist, die einen Hohlraum definieren, wobei die C-Profile leicht beabstandet zueinander angeordnet sein können. Das Rohr ist vorteilhaft gerade, kann aber auch gekrümmt, insbesondere schlangenförmig gekrümmt sein.

Zum Ein- und Auslagern von Hängeware in/aus einen/einem Lagerplatz wird das Lastaufnahmemittel vorteilhaft sehr exakt gegenüber dem Lagerplatz positioniert. Das flexible Element kann durch die exakte Positionierung ohne Versatz in die Führung eingeführt werden. Die Positionierung erfolgt vorteilhaft durch eine Steuerung des automatisierten Lagersystems. Es besteht aber auch die Möglichkeit, dass die Führung an einem Ende, das der Regalgasse zugewandt ist, trichterförmig ausgebildet ist.

In einer weiteren Ausführungsvariante ist das Transfermittel durch ein in die Lagerplätze ein- und ausfahrbares Teleskopelement gebildet. Das Teleskopelement weist vorzugsweise mehrere Glieder auf, die in Relation zueinander beim Einfahren in und Ausfahren aus den Lagerplätzen angetrieben durch die Antriebseinheit verschoben werden. Das Teleskopelement weist ein Führungselement und im vorderen Bereich zumindest ein Mitnahmeelement auf und die Führung ist durch eine Führungsschiene gebildet. Vorteilhaft ist die Führungsschiene durch ein zurecht gebogenes Blech gebildet. Das Führungselement ist vorteilhaft durch einen Hacken oder eine gelagerte Rolle gebildet und greift beim Ein- und/oder Auslagern von Hängeware zumindest temporär in die Führungsschiene ein, wodurch das Teleskopelement die Führungsschiene kontaktiert und entlang der Führungsschiene geführt wird und somit gestützt wird. Das zumindest eine Mitnahmeelement ist zum Ein- und/oder Auslagern von Hängeware so mit der Hängeware in Kontakt bringbar, dass das Teleskopelement beim Ausfahren Hängeware von dem Lastaufnahmemittel in oder auf die Lagerschiene eines der Lagerplätze verschiebt und/oder beim Einfahren Hängeware von der Lagerschiene eines der Lagerplätze auf das Lastaufnahmemittel verschiebt. Das zumindest eine Mitnahmeelement ist vorteilhaft durch einen Schnappmechanismus oder durch ein elektrisch oder pneumatisch betätigbaren Mechanismus gebildet. Durch die Führung des Teleskopelements ist der Vorteil erhalten, dass das Teleskopelement sehr leicht ausgebildet werden kann, da ein Durchhängen des Teleskopelements in ausgefahrenem Zustand durch die Führung zuverlässig verhindert wird.

Hängewaren können beispielweise Kleidung jeglicher Art, Taschen, Rucksäcke, an Seilen hängende Pakete, Fördertaschen mit verschiedensten Waren, etc. sein.

Weitere vorteilhafte Ausführungsvarianten des erfindungsgemäßen automatisierten Lagersystems werden in weiterer Folge anhand der Figuren näher erläutert.
Figur 1 zeigt einen allgemeinen Aufbau eines erfindungsgemäßen automatisierten Lagersystems in einer schematischen Ansicht.
Figuren 2 bis 5 zeigen eine erste Ausführungsvariante des erfindungsgemäßen automatisierten Lagersystems in verschiedenen Ansichten.
Figur 6 zeigt eine weitere Ausführungsvariante des erfindungsgemäßen automatisierten Lagersystems in einer Schnittansicht.
Figuren 7 bis 9 zeigen eine weitere Ausführungsvariante des erfindungsgemäßen automatisierten Lagersystems in verschiedenen Ansichten.

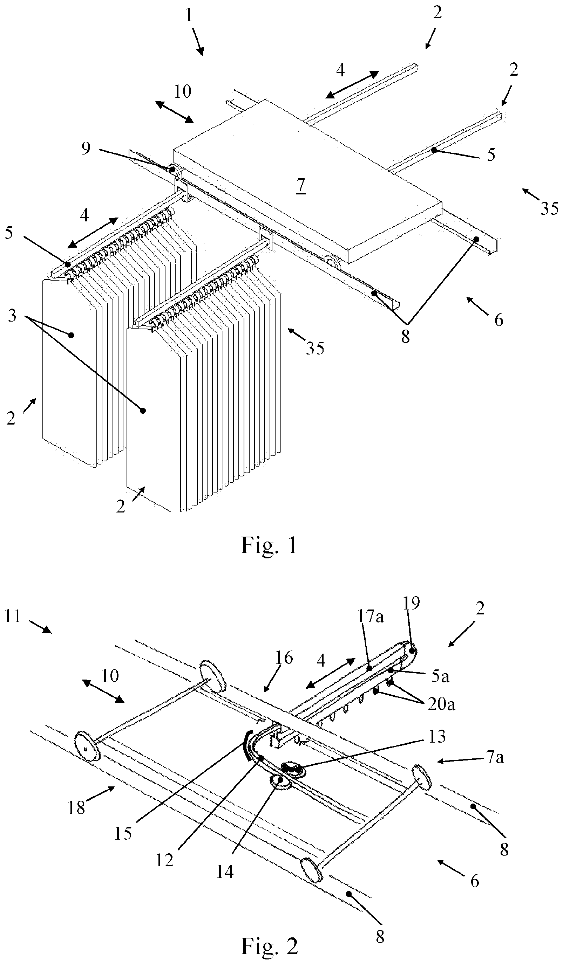

Figur 1 zeigt einen allgemeinen Aufbau eines erfindungsgemäßen automatisierten Lagersystems 1 in einer schematischen Ansicht, wobei sämtliche in den weiteren Figuren dargestellten und beschriebenen Ausführungsvarianten des erfindungsgemäßen automatisierten Lagersystems den gleichen in Figur 1 dargestellten allgemeinen Aufbau aufweisen. Das automatisierte Lagersystem 1 umfasst zwei nicht näher dargestellte Regale 35 mit Lagerplätzen 2 zum Lagern von Hängeware 3. Pro Regal 35 sind aus Gründen der Übersichtlichkeit nur zwei Lagerplätze 2 dargestellt, wobei pro Regal 35 aber eine Vielzahl von Lagerplätzen 2 vorgesehen sind. Die Hängeware 3 ist in einer Lagerrichtung 4 in den Lagerplätzen 2 in Lagerschienen 5 verschiebbar hängend gelagert. Jeder Lagerplatz 2 weist eine in Figur 1 nicht dargestellte Führung auf.

Ferner umfasst das automatisierte Lagersystem 1 zwischen den Regalen 35 eine Regalgasse 6 und ein durch ein Ebenenregalbediengerät gebildetes Lastaufnahmemittel 7. Das Lastaufnahmemittel 7 weist Räder 9 auf und ist in der Regalgasse 6 auf Fahrschienen 8 angetrieben durch einen nicht dargestellten Elektromotor in Längsrichtung 10 verfahrbar. Mittels einem auf dem Lastaufnahmemittel 7 ausgebildeten nicht dargestellten Transfermittel kann eine mit dem Lastaufnahmemittel 7 transportierte Hängeware 3 von dem Lastaufnahmemittel 7 auf die Lagerschiene 5 eines der Lagerplätze 2 eingelagert werden und/oder zumindest eine Hängeware 3 von der Lagerschiene 5 eines der Lagerplätze 2 auf das Lastaufnahmemittel 7 ausgelagert werden.

Figuren 2 bis 5 zeigen eine erste Ausführungsvariante des erfindungsgemäßen automatisierten Lagersystems 11 in verschiedenen Ansichten. Das erfindungsgemäße automatisierte Lagersystem 11 ist entsprechend des in Figur 1 dargestellten automatischen Lagersystems 1 aufgebaut. Elemente des automatisierten Lagersystems 11, die gleich aufgebaut sind wie Elemente des automatisierten Lagersystems 1 sind mit gleichen Bezugszeichen versehen.

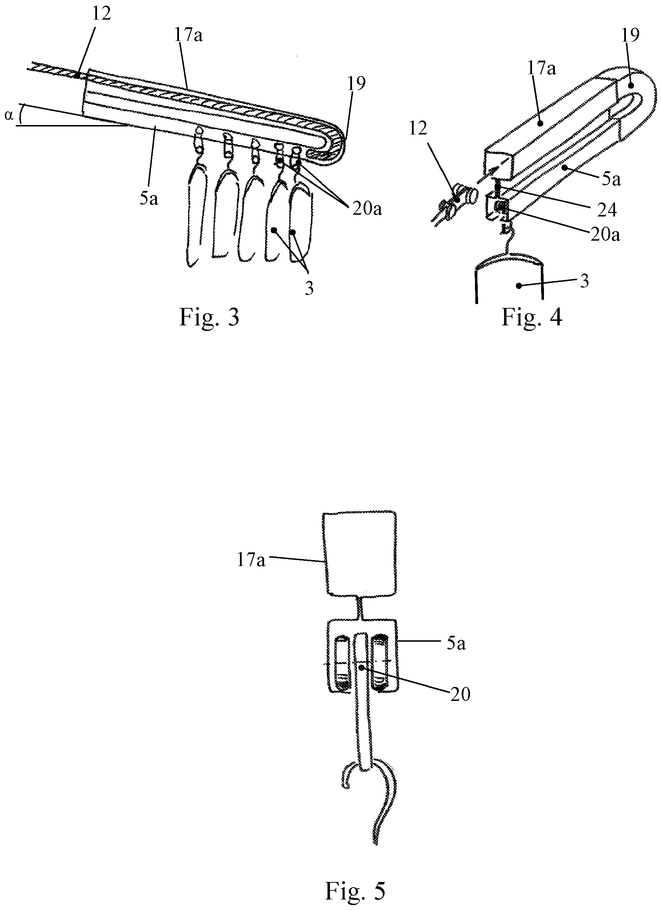

Jeder Lagerplatz 2 des Lagersystems 11 weist eine Führung 17a und eine Lagerschiene 5a auf. Die Führung 17a ist durch ein geschlossenes Vierkantrohr gebildet und die Lagerschiene 5a ist durch ein offenes Vierkantrohr gebildet, wobei die Führung 17a und die Lagerschiene 5a über einen Steg 24 miteinander verbunden sind. Siehe dazu insbesondere Figur 4. Die Hängeware 3 kann über Gleitelemente 20a in die Lagerschienen 5a in Lagerrichtung 4 eingeschoben werden oder aus der Lagerschiene 5a in Lagerrichtung 4 ausgeschoben werden. Vorteilhaft weisen die Gleitelemente 20a Rollen auf, um möglichst reibungsarm in den Lagerschienen 5a verschoben werden zu können.

Die Führung 17a und die Lagerschiene 5a sind in jedem Lagerplatz 2 durch ein Umlenkelement 19 verbunden. Das Umlenkelement 19 ist durch ein um 180° umgebogenes geschlossenes Vierkantrohr gebildet. Die Lagerschiene 5a ist geneigt, wobei die Lagerschiene 5a von der Regalgasse 6 aus in den Lagerplatz 2 abfällt, um ein schwerkraftbetriebenes Einlagern von Hängeware 3 in den Lagerplatz 2 zu ermöglichen. Vorteilhaft beträgt die Neigung α der Lagerschiene 5a abhängig von den Gleitelementen 20a zwischen 3° und 10°.

Ein Lastaufnahmemittel 7a des Lagersystems 11 weist ein durch ein flexibles Element, im Speziellen eine Kette 12, gebildetes Transfermittel auf. Das flexible Element kann aber auch durch ein Band oder einen Riemen gebildet sein. Die Kette 12 kann in jede Raumrichtung gewunden werden und ist in Längsrichtung 10 des Lastaufnahmemittels 7a in einem nicht näher ausgeführten Speicher am Lastaufnahmemittel 7a gelagert. Der Speicher kann zum Beispiel durch ein einfaches Vierkantrohr gebildet sein, welches mit einem Rahmen des Lastaufnahmemittels 7a verschraubt ist. Der Rahmen des Lastaufnahmemittels 7a ist aus Gründen der Übersichtlichkeit nicht in Figur 2 dargestellt.

Das Lastaufnahmemittel 7a weist ferner eine Antriebseinheit auf, die durch einen nicht dargestellten Elektromotor und ein Kettenrad 13 gebildet ist, wobei das Kettenrad 13 auf die Kette 12 wirkt. Um Schlupf zwischen der Kette 12 und dem Kettenrad 13 zu vermeiden ist ein Anpressrad 14 vorgesehen, dass die Kette 12 gegen das Kettenrad 13 presst. Die Antriebseinheit ist fest an dem Rahmen des Lastaufnahmemittels 7a verschraubt. Das Anpressrad 14 ist drehbar auf dem Rahmen des Lastaufnahmemittels 7a gelagert.

Darüber hinaus weist das Lastaufnahmemittel 7a eine Umlenkführung 15 auf, die die Kette 12 um 90° zu einer Seite 16 der Regalgasse 6 in Richtung des auf der Seite 16 angeordneten Lagerplatzes 2 umlenkt. Die Umlenkführung 15 ist sehr vereinfacht in Figur 2 dargestellt, wobei die Umlenkführung 15 vorteilhaft durch ein um 90° umgebogenes Vierkantrohr gebildet ist und an dem Rahmen des Lastaufnahmemittels verschraubt ist. Es versteht sich von alleine, dass für Lagerplätze 2, die an einer anderen Seite 18 der Regalgasse 6 angeordnet sind, eine zweite Kette 12 vorgesehen sein kann, die entsprechend in Richtung der Seite 18 durch eine weitere Umlenkführung umgelenkt wird. In einer weiteren Ausführungsvariante besteht aber auch die Möglichkeit, dass die Umlenkführung 15 so ausgebildet ist, dass sie die Kette 12 entweder zur Seite 16 oder zur Seite 18 umlenken kann.

Das Lastaufnahmemittel 7a weist weiterhin eine nicht dargestellte Aufnahmeschiene auf, die ausgebildet ist, die Hängeware 3 am Lastaufnahmemittel 7a aufzunehmen. Die Aufnahmeschiene ist im Querschnitt gleich ausgebildet wie die Lagerschiene 5a. Die Aufnahmeschiene ist entweder quer zur Längsrichtung 10 am Lastaufnahmemittel 7a ausgebildet oder ist parallel zur Kette 12 am Lastaufnahmemittel 7a angeordnet.

In weiterer Folge wird ein Auslagervorgang von in der Lagerschiene 5a gelagerter Hängeware 3 gemäß einem Auftrag näher beschrieben. Zum Auslagern von Hängeware 3 wird das Lastaufnahmemittel 7a durch eine Steuerung gesteuert entsprechend des Auftrags so gegenüber dem Lagerplatz 2 positioniert, dass ein Ende der Kette 12 - in Figur 2 bereits in die Führung 17a eingeführt dargestellt - in die Führung 17a einführbar ist. Dadurch fluchtet auch ein Ende der nicht dargestellten Aufnahmeschiene mit der Lagerschiene 5a.

Anschließend wird die Kette 12 angetrieben durch die Antriebseinheit in die Führung 17a eingeschoben. Das Umlenkelement 19 ist ausgebildet die Kette 12 von der Führung 17a in die Lagerschiene 5a umzulenken, sobald diese das Ende der Führung 17a erreicht hat. Wird nun die Kette 12 weiterhin in die Führung 17a durch die Antriebseinheit zugeführt, schiebt diese die Gleitelemente 20a und somit die in der Lagerschiene 5a gelagerte Hängeware 3 aus der Lagerschiene 5a auf die Aufnahmeschiene des Lastaufnahmemittels 7a. Befindet sich die gemäß dem Auftrag geforderte Hängeware 3 auf dem Lastaufnahmemittel 7a, wird die Kette 12 durch die Antriebseinheit aus der Lagerschiene 5a, aus dem Umlenkelement 19 und aus der Führung 17a ausgezogen. Das Lastaufnahmemittel 7a steht wieder für einen weiteren Auftrag zu Verfügung und kann entweder zu einem weiteren Lagerplatz 2 oder zu einer Übergabestation zum Übergeben der Hängeware an einen anschließenden Prozess oder eine weitere Förderanlage verfahren werden.

In einer weiteren Ausführungsvariante des erfindungsgemäßen automatisierten Lagersystems weist das Lastaufnahmemittel 7a einen Einlagermechanismus auf, der dazu ausgebildet ist, auf der Aufnahmeschiene angeordnete Hängeware 3 von der Aufnahmeschien in die Lagerschiene 5a eines Lagerplatzes 2 zu schieben, wobei die Gleitelemente 20a, sobald sie sich in der Lagerschiene 5a befinden, mit der Hängeware 3 aufgrund der Neigung α der Lagerschiene 5a in den Lagerplatz 2 hineingleiten. Vorteilhaft ist die Neigung α der Lagerschiene 5a an einen Reibungswiderstand zwischen Lagerschiene 5a und Gleitelement 20a und an ein Gewicht der Hängeware 3 angepasst.

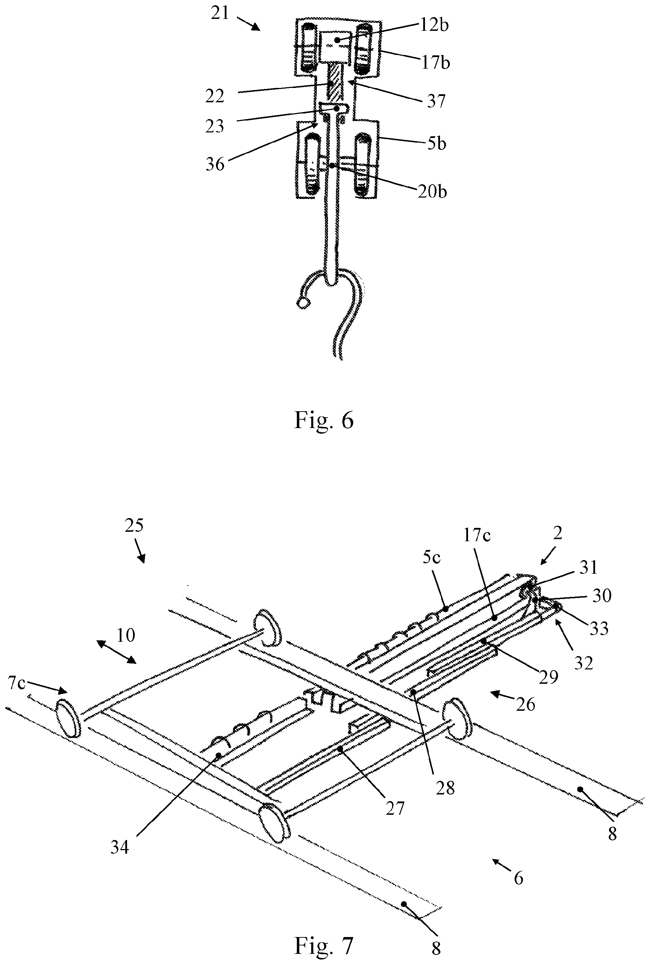

Figur 6 zeigt eine weitere Ausführungsvariante des erfindungsgemäßen automatisierten Lagersystems 21 in einer Schnittansicht. Das automatisierte Lagersystem 21 unterscheidet sich zum dem Lagersystem 11 gemäß Figuren 2 bis 5 dahingehend, dass die Lagerplätze 2 keine Umlenkelemente aufweisen. Eine Führung 17b und eine Lagerschiene 5b der Lagerplätze 2 sind an einem der Regalgasse 6 gegenüberliegenden Ende durch Deckel verschlossen und sind parallel zueinander angeordnet. Die Führung 17b ist durch ein einseitig offenes Rohr gebildet. Die Lagerschiene 5b ist durch ein zweiseitig offenes Rohr gebildet, wobei eine Öffnung 36 der Lagerschiene 5b an eine Öffnung 37 der Führung 17b anschließt.

Im Gegensatz zum automatisierten Lagersystem 11 gemäß den Figuren 2 bis 5 weist eine Kette 12b des automatisierten Lagersystems 21 zusätzlich ein Mitnahmeelement auf und ein Gleitelement 20b des automatisierten Lagersystems 21 weist zusätzlich eine Verlängerung 23 auf. Die Aufnahmeschiene und die Kette 12b sind parallel zueinander auf dem Lastaufnahmemittel 7a geführt.

Das Mitnahmeelement ist durch einen Schnappmechanismus gebildet. Das Mitnahmeelement weist ein mit einer nicht dargestellten Feder in eine erste Position vorgespanntes Betätigungselement 22 auf, wobei das Betätigungselement 22 in der ersten Position aus der Kette 12b hervorsteht. Figur 6 zeigt das Betätigungselement 22 in der ersten Position. Das Betätigungselement ist von der Seite aus gesehen dreiecksförmig ausgebildet und drehbar an einem Glied der Kette 12 gelagert.

Wird die Kette 12b nunmehr in die Führung 17b eingeschoben klappt das Betätigungselement 22 durch die Dreiecksform bei Kontakt mit den Verlängerungen 23 der Gleitelemente 20b zurück in eine zweite Position, wodurch das Betätigungselement 22 im Wesentlichen ohne Verschiebung der Hängeware 3 an der Hängeware 3 vorbei bewegbar ist. Dadurch kann die die Kette 12b komplett in die Führung 17b eingeschoben werden.

Wird die Kette 12b aus der Führung 17b herausgezogen verharrt das Betätigungselement 22 aufgrund der Federvorspannung in der ersten Position. Hierdurch werden die Gleitelemente 20b und somit die Hängeware 3 beim Herausziehen der Kette 12b mit aus der Lagerschiene 5b in die Aufnahmeschiene des Lastaufnahmemittels 7a geschoben und somit aus dem Lagerplatz 2 ausgelagert. Auch bei dieser Ausführungsvariante sind die Lagerschienen 5b der Lagerplätze 2 von der Regalgasse 6 in die Lageplätze 2 abfallend geneigt ausgebildet.

In einer weiteren Ausführungsvariante ist das Mitnahmeelement durch eine elektrisch oder pneumatisch betätigbares Betätigungselement gebildet, wobei das Betätigungselement zwischen einer ersten Position, in der es aus der Kette 12b hervorsteht, und einer zweiten Position, in der es im Wesentlichen nicht aus der Kette 12b hervorsteht verlagerbar ist. Bei dieser Ausführungsvariante kann das Mitnahmeelement zum Ein- und Auslagern von Hängeware 3 so mit der Hängeware 3 in Kontakt gebracht werden, dass die Kette 12b beim Einführen in die Führung 17b die Hängeware 3 von der Aufnahmeschiene des Lastaufnahmemittel 7a in die Lagerschiene 5b eines der Lagerplätze 2 verschiebt und/oder beim Ausziehen des flexiblen Elements aus der Führung 17b die Hängeware 3 von der Lagerschiene 5b eines der Lagerplätze 2 auf das Lastaufnahmemittel 7a verschiebt.

In einer weiteren Ausführungsvariante weist die Kette 12b mehrere beabstandet zueinander auf der Kette 12b angeordnete Mitnahmeelemente auf.

In einer weiteren Ausführungsvariante ist die Hängeware 2 direkt ohne Gleitelement 20b in die Führung 17b eingehängt.

Figuren 7 bis 9 zeigen eine weitere Ausführungsvariante des erfindungsgemäßen automatisierten Lagersystems 25 in verschiedenen Ansichten. Das erfindungsgemäße Lagersystem 25 ist entsprechend des in Figur 1 dargestellten automatisierten Lagersystem 1 aufgebaut. Elemente des automatisierten Lagersystems 25, die gleich aufgebaut sind wie Elemente des automatisierten Lagersystems 1 sind mit gleichen Bezugszeichen versehen.

Ein Lastaufnahmemittel 7c des automatisierten Lagersystems 25 weist ein durch ein Teleskopelement 26 gebildetes Transferelement auf, welches drei Glieder 27, 28 und 29 umfasst, wobei das Glied 27 fest mit einem Rahmen des Lastaufnahmemittels 7c verschraubt ist. Der Rahmen des Lastaufnahmemittels 7c ist der Einfachheit halber nicht in den Figuren 7 bis 9 dargestellt. Die anderen zwei Glieder 28 und 29 können angetrieben durch eine nicht dargestellte Antriebseinheit in einen Lagerplatz 2 ein- und ausgefahren werden, wobei an dem Glied 29 ein Führungselement 30 ausgebildet ist. Das Führungselement 30 weist eine Rolle 31 auf.

Ferner ist an dem Glied 29 im vorderen Bereich des Teleskopelements 26 ein Mitnahmeelement 32 ausgebildet. Das Mitnahmeelement 32 weist eine elektrisch betätigbares Betätigungselement 33 auf, welches in eine erste Position und eine zweite Position positionierbar ist.

Das Lastaufnahmemittel 7c weist ferner eine Aufnahmeschiene 34 auf, die quer zur Längsrichtung 10 am Lastaufnahmemittel 7c verschraubt ist.

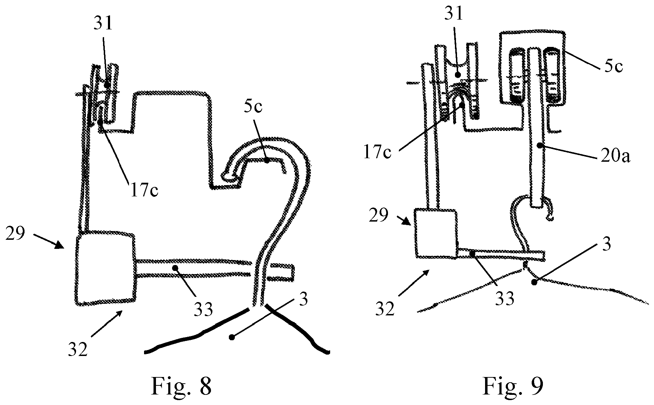

Eine Lagerschiene 5c und eine Führung 17c sind durch ein gebogenes Formprofil gebildet, wobei die Führung 17c durch eine Führungsschiene gebildet ist, welche die Rolle 31 bei ausgefahrenem Teleskopelement kontaktiert. Siehe dazu insbesondere Figur 8 oder Figur 9. Es besteht aber auch die Möglichkeit, dass die Lagerschiene 5c und die Führung 17c durch separate Formprofile gebildet sind, die miteinander verschraubt, verschweißt oder verklebt sind. Vorteilhaft ist die Lagerschiene 5c in Fig 9 geneigt ausgebildet, wobei die Lagerschiene 5c von der Regalgasse 6 aus in den Lagerplatz 2 abfällt, um ein schwerkraftbetriebenes Einlagern der Hängeware 3 in den Lagerplatz 2 zu ermöglichen. Vorteilhaft beträgt eine Neigung der Lagerschiene 5c abhängig vom Gleitelement 20a zwischen 3° und 10°.

In weiterer Folge wird ein Auslagervorgang von auf der Lagerschiene 5c angeordneter Hängeware 3 auf die Aufnahmeschiene 34 gemäß einem Auftrag näher beschrieben. Zum Auslagern von Hängeware 3 wird das Lastaufnahmemittel 7c durch eine Steuerung gesteuert entsprechend des Auftrags so gegenüber dem Lagerplatz 2 positioniert, dass die Aufnahmeschiene 34 mit der Lagerschiene 5c fluchtet. Das Betätigungselement 33 befindet sich in der zweiten Position.

Anschließend werden die Glieder 28 und 29 des Teleskopelementes 26 angetrieben durch die Antriebseinheit in den Lagerplatz 2 eingeschoben, wobei die Rolle 31 dabei auf der Führung 17c abrollt und die Teleskopstange 26 durch die Führung 17c geführt wird und wobei das Betätigungselement 33 ohne die Hängeware 3 zu berühren an dieser vorbei bewegt wird. Ist die Teleskopstange 26 ganz ausgefahren, wird das Betätigungselement 33 in die erste Position bewegt. Nun werden die Glieder 28 und 29 des Teleskopelements 26 wieder eingezogen. Durch das Betätigungselement 33 wird die Hängeware 3 erfasst und von der Lagerschiene 5c auf die Aufnahmeschiene 34 geschoben. Ist die Teleskopstange 26 wieder komplett eingefahren, steht das Lastaufnahmemittel 7c wieder für einen weiteren Auftrag zu Verfügung und kann einen weiteren Lagerplatz 2 oder eine Übergabestation zur Übergabe der Hängeware 3 ansteuern.

In einer weiteren Ausführungsvariante des erfindungsgemäßen automatisierten Lagersystems 25 wird das Betätigungselement 33 pneumatisch betätigt.

In einer weiteren Ausführungsvariante des erfindungsgemäßen automatisierten Lagersystems 25 ist das Mitnahmeelement 32 durch einen Schnappmechanismus gebildet.

In einer weiteren Ausführungsvariante des erfindungsgemäßen automatisierten Lagersystems 25 weist das Lastaufnahmemittel 7c ein zweites Teleskopelement auf, das in entgegengesetzten Richtung zum Teleskopelement 26 ausfahrbar ist, um beidseitig zur Regalgasse 6 Hängeware 3 aus Lagerplätzen 2 auszulagern.

In einer weiteren Ausführungsvariante weist das Teleskopelement 26 ein weiteres Mitnahmeelement auf, welches dem Mitnahmeelement 32 gegenüberliegend am Glied 29 ausgebildet ist. Hierdurch ist der Vorteil erhalten, dass Hängeware 3 von der Aufnahmeschiene 34 des Lastaufnahmemittels 7c auch auf die Lagerschiene 5c verschoben werden kann. Ferner besteht bei dieser Ausführungsvariante bei einem Teleskopelement, das beidseitig zur Regalgasse 6 ausgefahren werden kann, die Möglichkeit, beidseitig zur Regalgasse 6 Hängewaren 3 in Lagerplätze 2 einzulagern oder auszulagern. Bei dieser Ausführungsvariante können die Lagerschienen 5c auch waagrecht in den Lagerplätzen 2 angeordnet sein.

In einer weiteren Ausführungsvariante sind zusätzliche Mitnahmeelemente an dem Glied 29 ausgebildet.

Figuren 8 und 9 zeigen zwei verschiedene Ausführungsvarianten von Lagerschienen 5c im Detail. Die Lagerschiene 5c in Figur 8 ist durch eine Lippe gebildet, in die die Hängeware 3 direkt eingehängt werden kann, wobei die die Lagerschiene 5c in dieser Ausführungsvariante nicht geneigt, also im Wesentlichen waagrecht ausgebildet ist. Die Lagerschiene 5c in Figur 9 ist durch ein offenes Rohr gebildet, in das die Hängeware 3 über ein Gleitelement 20a eingehängt wird.

Es sei hier noch darauf hingewiesen, dass in einer besonders einfachen Ausführungsvariante des automatisierten Lagersystems die Möglichkeit besteht, dass die Führung durch die Lagerschiene gebildet ist. Vorteilhaft ist die Lagerschiene in Kombination mit Gleitelementen 20a geneigt ausgebildet, wobei die Lagerschiene von dem jeweiligen Lagerplatz aus in Richtung der Regalgasse abfällt, um ein schwerkraftbetriebenes Auslagern der Hängeware auf eine Aufnahmeschiene des Lastaufnahmemittels zu ermöglichen. Die Führung und die Aufnahmeschiene sind jeweils durch ein einfaches offenes Rohr gebildet und das Transfermittel ist durch ein flexibles Element gebildet, wobei die Aufnahmeschiene vorteilhaft so ausgebildet ist, dass sie Platz für die Hängeware bietet und dass sie das flexible Element auf dem Lastaufnahmemittel aufnimmt und in diesem führt. Die Lagerschiene weist an einem der Regalgasse zugewandten Ende einen Stoppmechanismus auf, der verhindert, dass Hängeware unkontrolliert aus den Lagerschienen gleitet. Der Stoppmechanismus ist vorteilhaft so ausgebildet, dass er das Einlagern von Hängeware jederzeit ermöglicht, aber das Auslagern nur durch Betätigung des Stoppmechanismus ermöglicht. Der Stoppmechanismus kann beispielsweise durch einen entriegelbaren Schnappmechanismus gebildet sein. Zum Einlagern von Hängeware in einen der Lagerplätze wird das Lastaufnahmemittel so gegenüber dem Lagerplatz positioniert, dass die Aufnahmeschiene mit der Führung fluchtet und dass die Hängeware angetrieben von der Antriebseinheit durch das flexible Element von der Aufnahmeschiene des Lastaufnahmemittels in die Führung eingeschoben werden kann. Zum Auslagern von Hängeware aus einem der Lagerplätze wird das Lastaufnahmemittel so gegenüber der Führung positioniert, dass die Aufnahmeschiene mit der Führung fluchtet und dass der Stoppmechanismus entriegelt werden kann, wodurch die in der Führung gelagerte Hängeware schwerkraftbetrieben in die Aufnahmeschiene des Lastaufnahmemittels gleitet.

## Patentansprüche

1. Automatisiertes Lagersystem (1; 11; 21; 25) mit zumindest zwei Regalen (35) mit Lagerplätzen (2) zum Lagern von Hängewaren (3), wobei die Hängewaren (3) in einer Lagerrichtung (4) in den Lagerplätzen (2) in Lagerschienen (5; 5a; 5b; 5c) verschiebbar hängend lagerbar sind, und mit einer durch die zumindest zwei Regale (35) gebildeten Regalgasse (6), in der ein Ebenenregalbediengerät (7; 7a; 7c) in einer Längsrichtung (10) verfahrbar ist, wobei das Ebenenregalbediengerät (7; 7a; 7c) ein Transfermittel und eine mit dem Ebenenregalbediengerät (7; 7a; 7c) fest verbundene Antriebseinheit zum Antreiben des Transfermittels aufweist, um bei einem Transfervorgang mit dem Transfermittel zumindest eine mit dem Ebenenregalbediengerät (7; 7a; 7c) transportierte Hängeware (3) von dem Ebenenregalbediengerät (7; 7a; 7c) auf die Lagerschiene (5; 5a; 5b, 5c) eines der Lagerplätze (2) einzulagern und/oder zumindest eine Hängeware (3) von der Lagerschiene (5; 5a; 5b; 5c) eines der Lagerplätze (2) auf das Ebenenregalbediengerät (7; 7a; 7c) auszulagern, **dadurch gekennzeichnet,**
**dass** jeder Lagerplatz (2) eine Führung (17a; 17b; 17c) aufweist, wobei die Führung (17a; 17b; 17c) ausgebildet ist das Transfermittel zumindest abschnittsweise beim Ein- und Auslagern von Hängeware (3) zu führen und,
**dass** das Transfermittel ausgebildet ist die Führung (17a; 17b; 17c) zumindest abschnittsweise beim Ein- und Auslagern von Hängeware (3) zu kontaktieren und,
**dass** das Transfermittel durch ein flexibles Element, insbesondere eine Kette (12; 12b), einen Riemen oder ein Band gebildet ist und,
**dass** die Führung (17a; 17b) so ausgebildet ist, dass das flexible Element angetrieben durch die Antriebseinheit in die Führung (17a; 17b) einführbar ist und/oder aus dieser ausziehbar ist und,
**dass** die Führung (17a; 17b) so ausgebildet ist, dass das flexible Element beim Einführen und/oder Ausziehen entlang der Führung (17a; 17b) geführt ist.

2. Automatisiertes Lagersystem (1; 11; 21) nach Anspruch 1, **dadurch gekennzeichnet, dass** die Führung (17a; 17b) durch ein rundes oder polygonal-förmiges offenes oder geschlossenes Rohr gebildet ist.

3. Automatisiertes Lagersystem (1; 11) nach Anspruch 1 oder 2, **dadurch gekennzeichnet, dass** die Führung (17a) und die Lagerschiene (5a) in jedem Lagerplatz (2) durch ein Umlenkelement (19) verbunden sind, wobei das Umlenkelement (19) ausgebildet ist das flexible Element von der Führung (17a) in die Lagerschiene (5a) umzulenken, um beim Auslagern in der Lagerschiene (5a) gelagerte Hängeware (3) aus der Lagerschiene (5a) auf das Ebenenregalbediengerät (7a) zu schieben.

4. Automatisiertes Lagersystem (1; 21) nach Anspruch 1 oder 2, **dadurch gekennzeichnet, dass** die Führung (17b) und die Lagerschiene (5b) parallel zueinander angeordnet sind und dass das flexible Element zumindest ein Mitnahmeelement aufweist, wobei das zumindest eine Mitnahmeelement zum Ein- und Auslagern von Hängeware (3) so mit der Hängeware (3) in Kontakt bringbar ist, dass das flexible Element beim Einführen in die Führung (17b) die Hängeware (3) von dem Ebenenregalbediengerät (7a) in oder auf die Lagerschiene (5b) eines der Lagerplätze (2) verschiebt und/oder beim Ausziehen des flexiblen Elements aus der Führung (17b) die Hängeware (3) von der Lagerschiene (5b) eines der Lagerplätze (2) auf das Ebenenregalbediengerät (7a) verschiebt.

5. Automatisiertes Lagersystem (1; 25) nach Anspruch 1, **dadurch gekennzeichnet, dass** das Transfermittel durch ein in die Lagerplätze ein- und ausfahrbares Teleskopelement (26) gebildet ist, welches ein Führungselement (30) und im vorderen Bereich zumindest ein Mitnahmeelement (32) aufweist, und dass die Führung (17c) durch eine Führungsschiene gebildet ist, wobei das Führungselement (30) beim Ein- und/oder Auslagern von Hängeware (3) zumindest temporär in die Führungsschiene eingreift und somit das Teleskopelement (26) entlang der Führungsschiene führt und wobei das zumindest eine Mitnahmeelement (32) zum Ein- und/oder Auslagern von Hängeware (3) so mit der Hängeware (3) in Kontakt bringbar ist, dass das Teleskopelement (26) beim Ausfahren die Hängeware (3) von dem Ebenenregalbediengerät (7c) in oder auf die Lagerschiene (5c) eines der Lagerplätze (2) verschiebt und/oder beim Einfahren die Hängeware (3) von der Lagerschiene (5c) eines der Lagerplätze (2) auf das Ebenenregalbediengerät (7c) verschiebt.

6. Automatisiertes Lagersystem (1; 25) nach Anspruch 5, **dadurch gekennzeichnet, dass** das Führungselement (30) durch zumindest eine Rolle (31) gebildet ist, welche auf der Führungsschiene abrollt.

7. Automatisiertes Lagersystem (1; 21; 25) nach einem der Ansprüche 4 bis 6, **dadurch gekennzeichnet, dass** das zumindest eine Mitnahmeelement (32) durch einen Schnappmechanismus oder durch einen elektrisch oder pneumatisch betätigbaren Mechanismus gebildet ist.

8. Automatisiertes Lagersystem (1; 11; 21; 25) nach einem der Ansprüche 1 bis 7, **dadurch gekennzeichnet, dass** die Lagerschienen (5; 5a; 5b; 5c) geneigt sind, wobei die Lagerschienen (5; 5a; 5b; 5c) von der Regalgasse (6) aus in die Lagerplätze (2) abfallen, um ein schwerkraftbetriebenes Einlagern der Hängeware (3) zu ermöglichen.

9. Automatisiertes Lagersystem (1; 11; 21) nach einem der Ansprüche 1 bis 8, **dadurch gekennzeichnet, dass** Gleitelemente (20a) vorgesehen sind, über die die Hängeware (3) in Lagerrichtung (4) in die Lagerschienen (5a) eingeschoben und aus den Lagerschienen (5a) ausgeschoben werden kann.

10. Automatisiertes Lagersystem (1; 11; 21) nach Anspruch 9, **dadurch gekennzeichnet, dass** die Gleitelemente (20a) Rollen aufweisen, um in den Lagerschienen (5a) verschoben zu werden.

## Claims

1. An automated storage system (1; 11; 21; 25) comprising at least two racks (35) with storage places (2) for storing hanging goods (3), wherein the hanging goods (3) are storable in a suspended fashion in the storage places (2) in storage rails (5; 5a; 5b; 5c) so as to be displaceable in a storage direction (4), and comprising a rack aisle (6) formed by the at least two racks (35), in which rack aisle a level rack operating device (7; 7a; 7c) is movable in a longitudinal direction (10), with the level rack operating device (7; 7a; 7c) having a transfer means and a drive unit for driving the transfer means, which drive unit is firmly connected to the level rack operating device (7; 7a; 7c), in order to store at least one hanging item (3) transported by the level rack operating device (7; 7a; 7c) from the level rack operating device (7; 7a; 7c) onto the storage rail (5; 5a; 5b, 5c) of one of the storage places (2) with the transfer means during a transfer process and/or to retrieve at least one hanging item (3) from the storage rail (5; 5a; 5b; 5c) of one of the storage places (2) onto the level rack operating device (7; 7a; 7c), **characterized in that**
each storage place (2) has a guide (17a; 17b; 17c), the guide (17a; 17b; 17c) being designed for guiding the transfer means, at least in sections, during the storing and retrieval of hanging goods (3), and
that the transfer means is designed for contacting the guide (17a; 17b; 17c), at least in sections, during the storing and retrieval of hanging goods (3) and the transfer means is formed by a flexible element, in particular a chain (12; 12b), a belt or a band, and
that the guide (17a; 17b) is designed such that the flexible element can be inserted into and/or retracted from the guide (17a; 17b) while being driven by the drive unit; and
that the guide (17a; 17b) is designed such that the flexible element is guided along the guide (17a; 17b) during the insertion and/or retraction.

2. An automated storage system (1; 11; 21) according to claim 1, **characterized in that** the guide (17a; 17b) is formed by a round or polygonal-shaped open or closed tube.

3. An automated storage system (1; 11) according to claim 1 or 2, **characterized in that** the guide (17a) and the storage rail (5a) are connected in each storage place (2) by a deflection element (19), the deflection element (19) being designed for deflecting the flexible element from the guide (17a) into the storage rail (5a) in order to push hanging goods (3) stored in the storage rail (5a) from the storage rail (5a) onto the level rack operating device (7a) for retrieval.

4. An automated storage system (1; 21) according to claim 1 or 2, **characterized in that** the guide (17b) and the storage rail (5b) are arranged in parallel to each other and that the flexible element has at least one driving element, wherein, for storing and retrieving hanging goods (3), the at least one driving element can be brought into contact with the hanging goods (3) in such a way that the flexible element, while being inserted into the guide (17b), shifts the hanging goods (3) from the level rack operating device (7a) into or onto the storage rail (5b) of one of the storage places (2) and/or, during the extraction of the flexible element from the guide (17b), shifts the hanging goods (3) from the storage rail (5b) of one of the storage places (2) onto the level rack operating device (7a).

5. An automated storage system (1; 25) according to claim 1, **characterized in that** the transfer means is formed by a telescopic element (26) movable into and out of the storage places, which comprises a guide element (30) and, in the front area, at least one driving element (32), and that the guide (17c) is formed by a guide rail, wherein the guide element (30) at least temporarily engages the guide rail during the storing and/or retrieval of hanging goods (3), thus guiding the telescopic element (26) along the guide rail, and wherein, for storing and/or retrieving hanging goods (3), the at least one driving element (32) can be brought into contact with the hanging goods (3) in such a way that the telescopic element (26), as it is moving out, shifts the hanging goods (3) from the level rack operating device (7c) into or onto the storage rail (5c) of one of the storage places (2) and/or, as it is moving in, shifts the hanging goods (3) from the storage rail (5c) of one of the storage places (2) onto the level rack operating device (7c).

6. An automated storage system (1; 25) according to claim 5, **characterized in that** the guide element (30) is formed by at least one roller (31) rolling on the guide rail.

7. An automated storage system (1; 21; 25) according to any of claims 4 to 6, **characterized in that** the at least one driving element (32) is formed by a snap mechanism or by an electrically or pneumatically operable mechanism.

8. An automated storage system (1; 11; 21; 25) according to any of claims 1 to 7, **characterized in that** the storage rails (5; 5a; 5b; 5c) are inclined, with the storage rails (5; 5a; 5b; 5c) descending from the rack aisle (6) into the storage places (2) in order to enable the hanging goods (3) to be stored in a gravity-driven manner.

9. An automated storage system (1; 11; 21) according to any of claims 1 to 8, **characterized in that** sliding elements (20a) are provided via which the hanging goods (3) can be pushed into the storage rails (5a) in the storage direction (4) and can be pushed out of the storage rails (5a).

10. An automated storage system (1; 11; 21) according to claim 9, **characterized in that** the sliding elements (20a) comprise rollers for being displaced in the storage rails (5a).

## Revendications

1. Système de stockage automatisé (1; 11; 21; 25) avec au moins deux rayonnages (35) avec des espaces de stockage (2) pour stocker des marchandises à suspendre (3), dans lequel les marchandises à suspendre (3) peuvent être suspendues dans une direction de stockage (4) de façon coulissante dans les espaces de stockage (2) dans des rails de stockage (5; 5a; 5b; 5c), et avec une travée de rayonnage (6) formée par au moins deux rayonnages (35), dans laquelle un appareil de desserte de rayonnage à plateau (7; 7a; 7c) peut se déplacer dans une direction longitudinale (10), dans lequel l'appareil de desserte de rayonnage à plateau (7; 7a; 7c) présente un moyen de transfert et une unité d'entrainement solidaire de l'appareil de desserte de rayonnage à plateau (7; 7a; 7c) pour, lors d'une opération de transfert avec le moyen de transfert, stocker au moins une marchandises à suspendre (3) transportée avec l'appareil de desserte de rayonnage à plateau (7; 7a; 7c) de l'appareil de desserte de rayonnage à plateau (7; 7a; 7c) sur le rail de stockage (5; 5a; 5b; 5c) d'un des espaces de stockage (2) et/ou déstocker au moins une marchandises à suspendre (3) du rail de stockage (5; 5a; 5b; 5c) d'un des espaces de stockage (2) sur l'appareil de desserte de rayonnage à plateau (7; 7a; 7c), **caractérisé en ce que** chaque espace de stockage (2) présente un guide (17a; 17b; 17c), lequel guide (17a; 17b; 17c) est configuré pour guider le moyen de transfert au moins sur une section lors du stockage et du déstockage d'une marchandise à suspendre (3), que le moyen de transfert est configuré pour entrer en contact avec le guide (17a; 17b; 17c) au moins sur une section lors du stockage et du déstockage d'une marchandise à suspendre (3),
que le moyen de transfert est formé par un élément flexible, en particulier une chaîne (12; 12b), une courroie ou une bande,
que le guide (17a; 17b) est configuré de telle sorte que l'élément flexible entraîné par l'unité d'entraînement peut être inséré dans le guide (17a; 17b) ou extrait de celui-ci et
que le guide (17a; 17b) est configuré de telle sorte que l'élément flexible est guidé lors de l'insertion et/ou de l'extraction le long du guide (17a; 17b).

2. Système de stockage automatisé (1; 11; 21) selon la revendication 1, **caractérisé en ce que** le guide (17a; 17b) est formé par un tube rond ou de forme polygonal ouvert ou fermé.

3. Système de stockage automatisé (1; 11) selon la revendication 1 ou 2, **caractérisé en ce que** le guide (17a) et le rail de stockage (5a) sont reliés dans chaque espace de stockage (2) par un élément de renvoi (19), lequel élément de renvoi (19) est configuré pour renvoyer l'élément flexible du guide (17a) au rail de stockage (5a), pour faire glisser, lors du déstockage, une marchandise à suspendre (3) stockée dans le rail de stockage (5a) du rail de stockage (5a) sur l'appareil de desserte de rayonnage à plateau (7a).

4. Système de stockage automatisé (1; 21) selon la revendication 1 ou 2, **caractérisé en ce que** le guide (17b) et le rail de stockage (5b) sont disposés parallèlement entre eux et que l'élément flexible présente au moins un élément d'entraînement, lequel au moins un élément d'entraînement peut être mis en contact, pour le stockage et le déstockage d'une marchandise à suspendre (3), avec la marchandise à suspendre (3) de sorte que l'élément flexible, lors du stockage dans le guide (17b), fait glisser la marchandise à suspendre (3) de l'appareil de desserte de rayonnage à plateau (7a) dans ou sur le rail de stockage (5b) d'un des espaces de stockage (2) et/ou, lors du déstockage de l'élément flexible hors du guide (17b), fait glisser la marchandises à suspendre (3) du rail de stockage (5b) d'un des espaces de stockage (2) sur l'appareil de desserte de rayonnage à plateau (7a).

5. Système de stockage automatisé (1; 25) selon la revendication 1, **caractérisé en ce que** le moyen de transfert est constitué par un élément télescopique (26) pouvant être inséré dans les espaces de stockage et en être extrait, qui présente un élément de guidage (30) et, dans la zone avant, au moins un élément d'entraînement (32), et que le guide (17c) est constitué par un rail de guidage, dans lequel l'élément de guidage (30), lors du stockage et/ou du déstockage d'une marchandise à suspendre (3), pénètre au moins temporairement dans le rail de guidage et guide ainsi l'élément télescopique (26) le long du rail de guidage, et dans lequel l'au moins un élément d'entraînement (32), pour le stockage et/ou le déstockage d'une marchandise à suspendre (3), peut être mis en contact avec la marchandise à suspendre de sorte que l'élément télescopique, lors de l'extraction, fait glisser la marchandise à suspendre (3) de l'appareil de desserte de rayonnage à plateau (7c) dans ou sur le rail de stockage (5c) d'un des espaces de stockage (2) et/ou, lors de l'insertion, fait glisser la marchandise à suspendre (3) du rail de stockage (5c) d'un des espaces de stockage (2) sur l'appareil de desserte de rayonnage à plateau (7c).

6. Système de stockage automatisé (1; 25) selon la revendication 5, **caractérisé en ce que** l'élément de guidage (30) est constitué par au moins un rouleau (31) qui roule sur le rail de guidage.

7. Système de stockage automatisé (1; 21; 25) selon une des revendications 4 à 6, **caractérisé en ce que** l'au moins un élément d'entraînement (32) est constitué par un mécanisme à encliquetage ou par un mécanisme à actionnement électrique ou pneumatique.

8. Système de stockage automatisé (1; 11; 21; 25) selon une des revendications 1 à 7, **caractérisé en ce que** les rails de stockage (5; 5a; 5b; 5c) sont inclinés, les rails de stockage (5; 5a; 5b; 5c) descendant depuis la travée de rayonnage (6) jusque dans les espaces de stockage (2) pour permettre un stockage par gravité de la marchandise à stocker (3).

9. Système de stockage automatisé (1; 11; 21) selon une des revendications 1 à 8, **caractérisé en ce que** sont prévus des éléments coulissants (20a) par le biais desquels la marchandise à stocker (3) peut être insérée dans les rails de stockage (5a) ou extraite des rails de stockage (5a) dans la direction de stockage (4).

10. Système de stockage automatisé (1; 11; 21) selon la revendication 9, **caractérisé en ce que** les éléments coulissants (20a) présentent des rouleaux pour de déplacer dans les rails de stockage (5a).
